Europäisches Patentamt

European Patent Office

Office européen des brevets

(11) Veröffentlichungsnummer: **0 464 974 A1**

## EUROPÄISCHE PATENTANMELDUNG

(21) Anmeldenummer: **91250164.0**

(22) Anmeldetag: **21.06.91**

(51) Int. Cl.5: **B60J 5/04**

(30) Priorität: **02.07.90 DE 4021235**

(43) Veröffentlichungstag der Anmeldung: **08.01.92 Patentblatt 92/02**

(84) Benannte Vertragsstaaten: **DE ES FR GB IT**

(71) Anmelder: **MANNESMANN Aktiengesellschaft Mannesmannufer 2 W-4000 Düsseldorf 1(DE)**

(72) Erfinder: **Wieting, Enno Kückelswerth 7 W-4030 Rathingen 6(DE)** Erfinder: **Fischer, Joachim Borbecker Strasse 123 W-4330 Mülheim(DE)**

(74) Vertreter: **Presting, Hans-Joachim, Dipl.-Ing. et al Meissner & Meissner Patentanwaltsbüro Herbertstrasse 22 W-1000 Berlin 33(DE)**

(54) **Türverstärkerrohr.**

(57) Die Erfindung betrifft ein Türverstärkerrohr mit hoher Verformungsarbeit zur Aufpralldämpfung für die Verstärkung der Tür eines Kraftfahrzeuges, insbesondere eines Personenkraftwagens.

Um ein derartiges Verstärkerrohr zu schaffen, welches unter Einsatz fertigungstechnisch einfacher Mittel hohen impulsartigen Biegebelastungen standhält und eine hohe Verformungsarbeit aufnehmen kann, wird erfindungsgemäß vorgeschlagen, daß innerhalb des Türverstärkerrohres (1) ein um die neutrale Faser verdrilltes Band (2') angeordnet ist.

Fig. 2

Die Erfindung betrifft ein Türverstärkerrohr mit hoher Verformungsarbeit zur Aufpralldämpfung für die Verstärkung der Tür eines Kraftfahrzeuges, insbesondere eines Personenkraftwagens.

Türverstärkerrohre dienen zur Sicherung des Fahrgastraumes eines Personenkraftfahrzeuges, indem sie die gesamte Türkonstruktion versteifen und damit Verformungsarbeit aufnehmen können. Sowohl die Vorschriften der US-Regierung als auch die allgemeinen Bemühungen zur Senkung des Kraftstoffverbrauches zwingen die Automobilhersteller zu drastischer Gewichtsreduzierung der Kraftfahrzeuge. Aus diesem Grunde können in diesem speziellen Einsatzbereich keine Massivprofile eingesetzt werden. Unter der Maßgabe der Gewichtsreduktion bei gleichzeitiger Gewährleistung hoher Sicherheit ist der DE 36 21 697 ein Lösungsvorschlag zu entnehmen, bei dem innerhalb eines rohrförmigen Hohlprofils Versteifungsgitter angeordnet sind. Diese bekannten Versteifungsgitter bestehen aus wabenförmigen, linsenförmigen, quadratischen oder runden Querschnittsprofilen.

Aufgrund der Tatsache, daß bei diesen bekannten Verstärkerrohren die Versteifungsgitter in einer gegebenen Orientierung innerhalb des Rohres angeordnet sind, ergibt sich der Nachteil, daß das Verstärkerrohr einer senkrecht zur Längsachse des Verstärkerrohres angreifenden Aufprallkraft abhängig von der Orientierung des Rohres unterschiedliche Gegenkräfte erzeugt. Das bedeutet auch, daß ein solches Türverstärkerrohr in verschiedenen Knickrichtungen auch unterschiedliche Verformungsarbeiten aufnimmt. Ein weiterer Nachteil ergibt sich daraus, daß sowohl die Herstellung als auch der Einbau solcher Versteifungsgitter aufwendig ist.

Aus dem Bereich Biegen von Rohren ist es bekannt (DE-PS 113084) eine sogenannte "Biegefeder" als Versteifungselement zu verwenden, um das Rohr am Einknicken zu hindern. Zum Einführen in das Rohr und zum Entfernen nach dem Biegen ist die Feder an den Enden mit Kopfplatten vesehen, wobei an einer Kopfplatte drehbar eine Kette oder ein Seil befestigt ist.

Aufgabe der Erfindung ist es, ein Türverstärkerrohr zu schaffen, welches unter Einsatz fertigungstechnisch einfacher Mittel hohen impulsartigen Biegebelastungen standhält und eine hohe Verformungsarbeit aufnehmen kann, wobei die Steifigkeit und Biegefestigkeit des Rohres unabhängig von der radialen Orientierung des Rohres zur Belastungsrichtung sein soll.

Die gestellte Aufgabe ist erfindungsgemäß dadurch gelöst, daß innerhalb des Türverstärkerrohres ein um die neutrale Faser verdrilltes Band angeordnet ist.

Eine vorteilhafte Ausgestaltung der Erfindung besteht darin, das Versteifungselement als Zugfeder auszubilden. Eine weitere alternative vorteilhafte Ausgestaltung der Erfindung besteht darin, das Versteifungselement als ein um die neutrale Faser verdrilltes Band auszubilden. In weiterer vorteilhafter Ausgestaltung der Erfindung ist das verdrillte Band mit einer Windungszahl von 1 Windung pro Zentimeter verdrillt. Zur möglichst einfachen Realisierung einer solchen Windungszahl ist die Innenabmessung des Türverstärkerrohres und damit die Breite des zu verdrillenden Bandes im Bereich von ca. 15 mm bis 35 mm zu wählen. Bei Abmessungen außerhalb dieses genannten Bereiches ist mit einem fertigungstechnisch höheren Aufwand zu rechnen. Das Band besteht hierbei in vorteilhafter Weise aus Stahl. Zur Befestigung des Versteifungselementes innerhalb des Rohres ist in vorteilhafter Ausgestaltung der Erfindung das Versteifungselement mit Füllschaum fixiert oder alternativ dazu eingeklebt.

Die Vorteile der Erfindung liegen im weiteren darin begründet, daß die erfindungsgemäß vorgeschlagenen Versteifungselemente konstruktiv einfach und zudem sehr wirkungsvoll sind. Sowohl bei der Verwendung einer Zugfeder, als auch eines um seine neutrale Faser verdrillten Bandes, besitzt das Rohr unabhängig von seiner radialen Anordnung bezüglich der angreifenden Kraft gleiche Steifigkeit und gleiches Vermögen Verformungsarbeit aufzunehmen. Im Detail liegt dieser Vorteil darin begründet, daß sowohl bei der Verwendung einer Zugfeder als auch des verdrillten Bandes, daß das Versteifungselement Flächenelemente besitzt, die parallel zur von außen angreifenden Kraft angeordnet sind und ihr antiparallel entgegenwirken. Die Einfachheit der erfindungsgemäß vorgeschlagenen Konstruktion ermöglicht in besonders vorteilhafter Weise eine fertigungstechnisch einfache Umsetzung der Erfindungsidee.

Ein weiterer Vorteil des erfindungsgemäß vorgeschlagenen Türverstärkerrohres liegt sicherheitstechnisch darin begründet, daß das Türverstärkerrohr im Belastungsfall bogenförmig deformiert wird und nicht keilförmig einknickt.

Eine besonders vorteilhafte Ausgestaltung der Erfindung ergibt sich aus der Kombination der Ansprüche 3 bis 6. Neben dem Einsatz von Stahl als Material sowohl des Türverstärkerrohres selbst, als auch der Versteifungselemente, ist auch der Einsatz von faserverstärkten Kunststoffen denkbar. Außerdem wäre auch der Einsatz von Materialien auf Kohle- oder Glasbasis möglich. Selbstverständlich ist es außerdem möglich, die genannten Materialien miteinander zu kombinieren, indem beispielsweise das Türverstärkerrohr selbst aus Stahl besteht und das Versteifungselement aus einem der o. g. Werkstoffe.

Die Erfindung ist in Ausführungsbeispielen anhand einer Zeichnung dargestellt und nachfolgend erläutert.

Es zeigen:

Figur 1    Türverstärkerrohr mit Versteifungselement Zugfeder

Figur 2    Türverstärkerrohr mit Versteifungselement verdrilltes Band

Figur 3    Versteifungselement verdrilltes Band

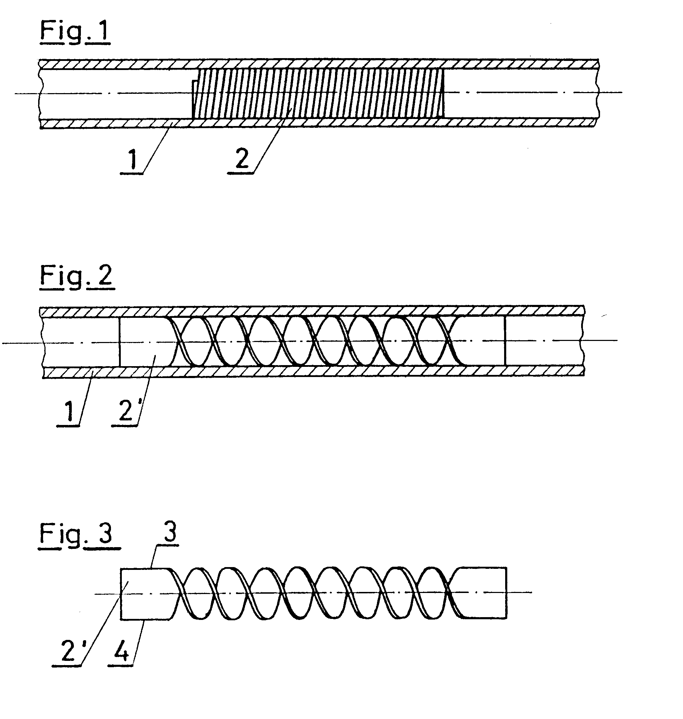

Figur 1 zeigt das Türverstärkerrohr 1 mit dem Versteifungselement Zugfeder 2. Die Zugfeder 2 erstreckt sich dabei innerhalb des mittleren Drillels der Länge des Türverstärkerrohres 1, weil sich erfahrungsgemäß der knickgefährdete Bereich eines Türverstärkerrohres auf diese Zone im wesentlichen beschränkt. Die ganze Anordnung erfüllt damit auch die Maßgabe einer gewichtsersparenden Konstruktion.

Figur 2 zeigt das Türverstärkerrohr 1 mit dem Versteifungselement verdrilltes Band 2'. Das verdrillte Band erstreckt sich in gleicher Weise wie in Figur 1 nur über das mittlere Drittel der Länge des Türverstärkerrohres 1.

Figur 3 zeigt das Versteifungselement verdrilltes Band 2' im Detail. Hierbei fällt die besondere Art der Rotationssymmetrie dieses Versteifungselementes ins Auge. Aufgrund dieser Tatsache ist gewährleistet, daß die Steifigkeit des Türverstärkerrohres unabhängig von der radialen Orientierung des Versteifungselementes innerhalb des Türverstärkerrohres ist, was dazu führt, daß das Türverstärkerrohr in jeder radialen Orientierung zu einer möglichen angreifenden Aufprallkraft gleiche Gegenkräfte aufbringt. Aus Figur 3 wird auch deutlich, daß sich die Flächenelemente des verdrillten Bandes immer zwischen den ebenfalls schraubenförmig ineinander verdrillten Rändern 3 und 4 erstrecken. Dies bedeutet, daß sich die Flächenelemente des Versteifungselementes radial um die neutrale Faser in alle Raumrichtungen erstrecken und somit Abstützung in allen Raumrichtungen gewährleistet. Gemeint sind dabei alle Raumrichtungen, die sich radial um die neutrale Faser herum erstrecken.

Je nach verwendetem Material können die Versteifungselemente eingeschweißt, eingeklebt oder eingeschäumt sein, wobei eine Fixierung dieser Art nur eine Bedeutung im unbelasteten Fall hat. Im belasteten Fall ist durch die enge Abmessungsanpassung der Versteifungselemente an das Türverstärkerrohr gegeben, daß die Versteifungselemente nur in gewollter Weise geringfügig ausweichen können.

**Patentansprüche**

1.    Türverstärkerrohr mit hoher Verformungsarbeit zur Aufpralldämpfung für die Verstärkung der Tür eines Kraftfahrzeuges, insbesondere eines Personenkraftwagens, **dadurch gekennzeichnet,** daß innerhalb des Türverstärkerrohres (1) ein um die neutrale Faser verdrilltes Band (2') angeordnet ist.

2.    Türverstärkerrohr nach Anspruch 1, **dadurch gekennzeichnet,** daß das verdrillte Band (2') mit einer Windungszahl von 1 Windung pro Zentimeter verdrillt ist.

3.    Türverstärkerrohr nach Anspruch 2, **dadurch gekennzeichnet,** daß das Band (2') aus metallischem Werkstoff besteht.

4.    Türverstärkerrohr nach einem oder mehreren der vorhergehenden Ansprüche, **dadurch gekennzeichnet,** daß das verdrillte Band (2') innerhalb des Türverstärkerrohres (1) mit einem Füllschaum fixiert ist.

5.    Türverstärkerrohr nach einem oder mehreren der vorhergehenden Ansprüche, **dadurch gekennzeichnet,** daß das verdrillte Band (2') innerhalb des Türverstärkerrohres (1) eingeklebt ist.

Fig.1

1

2

Fig.2

1

2'

Fig.3

3

2'

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 621 697 (ERBSLÖH)<br>* Spalte 4, Zeile 20 - Zeile 31; Abbildung 6 *<br>– – – – – | 1 | B 60 J 5/04 |
| | | | **RECHERCHIERTE SACHGEBIETE (Int. Cl.5)**<br><br>B 60 J |

Der vorliegende Recherchenbericht wurde für alle Patentansprüche erstellt

| Recherchenort | Abschlußdatum der Recherche | Prüfer |
|---|---|---|
| Den Haag | 16 Oktober 91 | FOGLIA A. |